# EUROPEAN PATENT APPLICATION

(11) **EP 4 503 742 A1**
(43) Date of publication of application: **05.02.2025**
(21) Application number: 23778294.1
(22) Date of filing: 29.03.2023
(51) Int. Cl.: H04W 36/14, H04W 76/18

(54) **RESOURCE CONTROL METHOD AND APPARATUS, TERMINAL, AND NETWORK SIDE DEVICE**

(30) Priority: 29.03.2022 CN 202210320869
(71) Applicant: VIVO MOBILE COMMUNICATION CO., LTD., Dongguan, Guangdong 523863 (CN)
(72) Inventor: YU, Hang, Dongguan, Guangdong 523863 (CN); KANG, Yanchao, Dongguan, Guangdong 523863 (CN)
(74) Representative: Shieldmark
(86) International application number: PCT/CN2023/084722
(87) International publication number: WO 2023/185929

(57) **Abstract**

The present application relates to the field of wireless communications, and discloses a resource control method and apparatus, a terminal, and a network side device. The resource control method in the embodiments of the present application comprises: a network side device determines that the reactivation of a first PDU session initiated by a terminal fails due to NSAC of a first slice; and the network side device sends a first message to the terminal, wherein the first message carries at least one of the following: first indication information used for indicating that the reason why the reactivation of the first PDU session fails is that the NSAC of the first slice fails; and second indication information used for indicating a first timer bound to the first slice and indicating that the terminal is allowed to initiate the reactivation of the first PDU session associated with the first slice again after the first timer times out.

## Description

### CROSS-REFERENCE TO RELATED APPLICATIONS

The present invention claims priority to Chinese Patent Application No. 202210320869.9, filed with the China National Intellectual Property Administration on March 29, 2022, and entitled "RESOURCE CONTROL METHOD AND APPARATUS, TERMINAL, AND NETWORK SIDE DEVICE", which is incorporated herein by reference in its entirety.

### TECHNICAL FIELD

This application pertains to the field of wireless communication technologies, and specifically relates to a resource control method and apparatus, a terminal, and a network-side device.

### BACKGROUND

Network slicing access control (network slicing access control, NSAC) is a method for the network side to control resources associated with slices, including the number of terminals (User Equipment, UE) associated with the slices, the number of protocol data unit (Protocol Data Unit, PDU) sessions associated with the slices, the data rate associated with the slices, and the like. In addition, this control is managed separately according to access types (access type).

In related technologies, if an associated slice requires NSAC, the session management function (Session Management Function, SMF) performs NSAC when the PDU session is established for the first time, and the network slicing access control function (Network Slicing Access Control Function, NSACF) performs access control for different access types (access type). That is, the network side controls the number of PDU sessions (session) for different 3rd Generation Partnership Project (3rd Generation Partnership Project, 3GPP) access types and non-3GPP access types. If the number of PDU sessions of a specific access type associated with a specific slice reaches the maximum value, the SMF will reject to use this slice to establish a PDU session of this access type.

In related technologies, in some cases, the network side may require the terminal to switch the access type of a PDU session from non-3GPP access to 3GPP access, and rebuild user plane resources on 3GPP access. After the terminal receives the request from the network side, if the single network slice selection assistance information (Single Network Slice Selection Assistance Information, S-NSSAI) associated with the established non-3GPP access PDU session is an allowed S-NSSAI for 3GPP access, the UE can transmit a service request to notify the network side that the terminal supports the reactivation of the PDU session, that is, the type of the PDU session is switched from non-3GPP access to 3GPP access. After receiving the request from the terminal, the network side performs NSAC before establishing the PDU session of 3GPP access. If the NSAC succeeds and the PDU session is successfully established, a service accept message is sent to the terminal to notify the terminal. However, if the NSAC fails, the network side does not notify the terminal that the PDU session reactivation has failed due to NSAC, resulting in the terminal not being able to obtain the corresponding information.

### SUMMARY

Embodiments of this application provide a resource control method and apparatus, a terminal, and a network-side device, which can solve the problem that the terminal cannot obtain information that PDU session reactivation has failed due to NSAC in the above scenarios.

According to a first aspect, a resource control method is provided, including: determining, by a network-side device, failure of reactivation of a first PDU session initiated by a terminal due to NSAC of a first slice; and transmitting, by the network-side device, a first message to the terminal, where the first message carries at least one of the following: first indication information, indicating a cause of the failure, where the causer of the failure indicates that a cause of the failure of the reactivation of the first PDU session is failure of the NSAC of the first slice; and second indication information, indicating a first timer bound to the first slice and indicating that the terminal is allowed to reinitiate reactivation of the first PDU session associated with the first slice after expiry of the first timer.

According to a second aspect, a resource control apparatus is provided, including: a first determining module, configured to determine failure of reactivation of a first PDU session initiated by a terminal due to NSAC of a first slice; and a first transmitting module, configured to transmit a first message to the terminal, where the first message carries at least one of the following: first indication information, used to indicate that a cause of the failure of the reactivation of the first PDU session is failure of NSAC of the first slice; and second indication information, indicating a first timer bound to the first slice and indicating that the terminal is allowed to reinitiate reactivation of the first PDU session associated with the first slice after expiry of the first timer.

According to a third aspect, a PDU session reactivation method is provided, including: transmitting, by a terminal, a first PDU session reactivation request to a network-side device, where the first PDU session reactivation request carries an identifier of a first PDU session, the first PDU session is associated with a first slice, and the first request message requests a reactivation of the first PDU session; and receiving, by the terminal, a first message transmitted by the network-side device, where the first message carries at least one of the following: first indication information, used to indicate a cause of the failure, where the cause of the failure indicates that a cause of the failure of the reactivation of the first PDU session is the failure of the NSAC of the first slice; and second indication information, indicating a first timer bound to the first slice and indicating that the terminal is allowed to reinitiate reactivation of the first PDU session associated with the first slice after expiry of the first timer.

According to a fourth aspect, a PDU session reactivation apparatus is provided, including: a second transmitting module, configured to transmit a first PDU session reactivation request to a network-side device, where the first PDU session reactivation request carries an identifier of a first PDU session, the first PDU session is associated with a first slice, and the first request message requests a reactivation of the first PDU session; and a second receiving module, configured to receive a first message transmitted by the network-side device, where the first message carries at least one of the following: first indication information, indicating a cause of the failure, where the cause of the failure indicates that a cause of the failure of the reactivation of the first PDU session is failure of the NSAC of the first slice; and second indication information, indicating a first timer bound to the first slice and indicating that the terminal is allowed to reinitiate reactivation of the first PDU session associated with the first slice at expiry of the first timer.

According to a fifth aspect, a terminal is provided, where the terminal includes a processor and a memory, where the memory stores a program or instruction executable on the processor, and when the program or instruction is executed by the processor, the steps of the method according to the third aspect are implemented.

According to a sixth aspect, a terminal is provided, including a processor and a communication interface, where the processor is configured to implement the steps of the method according to the third aspect, and the communication interface is configured to communicate with external devices.

According to a seventh aspect, a network-side device is provided, where the network-side device includes a processor and a memory. The memory stores a program or instruction executable on the processor and when the program or instruction is executed by the processor, the steps of the method according to the first aspect are implemented.

According to an eighth aspect, a network-side device is provided, including a processor and a communication interface, where the processor is configured to implement the steps of the method according to the first aspect, and the communication interface is configured to communicate with external devices.

According to a ninth aspect, a resource control system is provided, including: a terminal and a network-side device, where the terminal may be configured to execute the steps of the method according to the third aspect, and the network-side device may be configured to execute the steps of the method according to the first aspect.

According to a tenth aspect, a readable storage medium is provided, where a program or instruction is stored in the readable storage medium, and when the program or the instruction is executed by a processor, the steps of the method according to the first aspect are implemented, or the steps of the method according to the third aspect are implemented.

According to an eleventh aspect, a chip is provided, where the chip includes a processor and a communication interface. The communication interface is coupled to the processor, and the processor is configured to run a program or instruction to implement the steps of the method according to the first aspect or the steps of the method according to the third aspect.

According to a twelfth aspect, a computer program/program product is provided, where the computer program/program product is stored in a storage medium, and the computer program/program product is executed by at least one processor to implement the steps of the method according to the first aspect or the steps of the method according to the third aspect.

In the embodiments of this application, in a case that the network-side device determines failure of the reactivation of the first PDU session initiated by the terminal due to the NSAC of the first slice, it transmits the first indication information and/or the second indication information to the terminal. The first indication information indicates that the cause of the failure is the failure of the NSAC of the first slice, and the second indication information indicates the first timer bound to the first slice and indicates that the terminal is allowed to reinitiate the reactivation of the first PDU session associated with the first slice after the first timer expires. This enables the terminal to learn that the reactivation of the first PDU session failed due to the NSAC of the first slice, thereby allowing the terminal to perform more efficient slice resource control.

### BRIEF DESCRIPTION OF DRAWINGS

FIG. 1 is a block diagram of a wireless communications system to which the embodiments of this application are applicable;
FIG. 2 is a schematic flowchart of a resource control method in related technologies;
FIG. 3 is a schematic flowchart of a resource control method according to an embodiment of this application;
FIG. 4 is a schematic flowchart of a PDU session reactivation method according to an embodiment of this application;
FIG. 5 is another schematic flowchart of a resource control method according to an embodiment of this application;
FIG. 6 is a schematic structural diagram of a resource control apparatus according to an embodiment of this application;
FIG. 7 is a schematic structural diagram of a PDU session reactivation apparatus according to an embodiment of this application;
FIG. 8 is a schematic structural diagram of a communication device according to an embodiment of this application;
FIG. 9 is a schematic diagram of a hardware structure of a terminal according to an embodiment of this application; and
FIG. 10 is a schematic diagram of a hardware structure of a network-side device according to an embodiment of this application.

### DETAILED DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that terms used in this way are interchangeable in appropriate circumstances such that the embodiments of this application can be implemented in other orders than the order illustrated or described herein. In addition, objects distinguished by "first" and "second" are generally of a same type, and the quantities of the objects are not limited, for example, there may be one or more first objects. In addition, "and/or" in the specification and claims represents at least one of connected objects, and the character "/" generally indicates that the associated objects have an "or" relationship.

It should be noted that technologies described in the embodiments of this application are not limited to long term evolution (Long Term Evolution, LTE) or LTE-Advanced (LTE-Advanced, LTE-A) systems, and may also be applied to other wireless communications systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other applications than an NR system application, for example, the 6^{th} generation (6^{th} Generation, 6G) communications system.

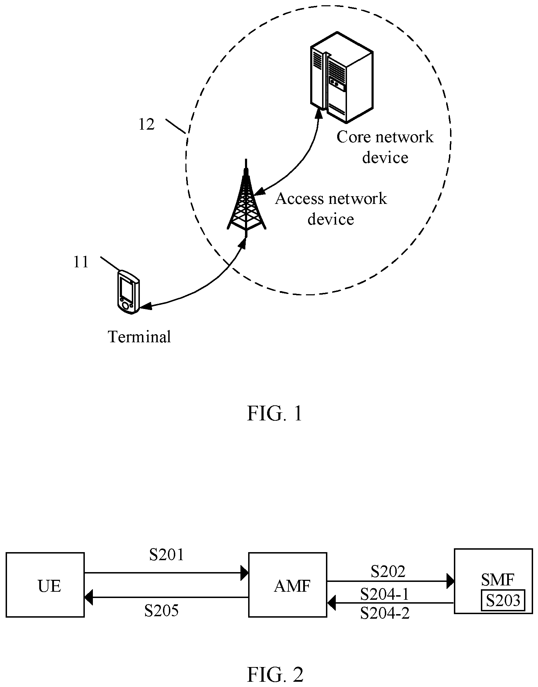

FIG. 1 is a block diagram of a wireless communications system to which the embodiments of this application may be applicable. The wireless communications system includes a terminal 11 and a network-side device 12. The terminal 11 may be a mobile phone, tablet personal computer (Tablet Personal Computer), laptop computer (Laptop Computer) or notebook computer, personal digital assistant (Personal Digital Assistant, PDA), palmtop computer, netbook, ultra-mobile personal computer (ultra-mobile personal computer, UMPC), mobile internet device (Mobile Internet Device, MID), augmented reality (augmented reality, AR)/virtual reality (virtual reality, VR) device, robot, wearable device (Wearable Device, WD), vehicle user equipment (Vehicle User Equipment, VUE), pedestrian user equipment (Pedestrian User Equipment, PUE), smart home device (wireless communication-enabled home devices such as refrigerators, televisions, washing machines, or furniture), gaming console, personal computer (Personal Computer, PC), automated teller machine or self-service machine, or other terminal-side devices. Wearable devices include smartwatches, smart bands, smart earphones, smart glasses, smart jewelry (smart bangles, smart bracelets, smart rings, smart necklaces, smart foot bangles, and smart anklets), smart wristbands, and smart clothing. It should be noted that the specific type of the terminal 11 is not limited in the embodiments of this application. The network-side device 12 may include an access network device and/or a core network device. The access network device may also be referred to as a radio access network device, a radio access network (Radio Access Network, RAN), a radio access network function, or a radio access network unit. The access network device 12 may include base stations, wireless local area network (Wireless Local Area Network, WLAN) access points, wireless fidelity (Wireless Fidelity, WiFi) nodes, or the like. The base station may be referred to as Node B, evolved Node B (eNB), access point, base transceiver station (Base Transceiver Station, BTS), radio base station, radio transceiver, basic service set (Basic Service Set, BSS), extended service set (Extended Service Set, ESS), home Node B, home evolved Node B, transmitting receiving point (Transmitting Receiving Point, TRP), or other appropriate terms in the field. As long as the same technical effect is achieved, the base station is not limited to any specific technical terminology. It should be noted that in the embodiments of this application, only the base station in the NR system is introduced as an example, and the specific type of the base station is not limited. The core network device may include but is not limited to at least one of the following: core network node, core network function, mobility management entity (Mobility Management Entity, MME), access and mobility management function (Access and Mobility Management Function, AMF), session management function (Session Management Function, SMF), user plane function (User Plane Function, UPF), policy control function (Policy Control Function, PCF), policy and charging rules function (Policy and Charging Rules Function, PCRF), edge application server discovery function (Edge Application Server Discovery Function, EASDF), unified data management (Unified Data Management, UDM), unified data repository (Unified Data Repository, UDR), home subscriber server (Home Subscriber Server, HSS), centralized network configuration (Centralized network configuration, CNC), network repository function (Network Repository Function, NRF), network exposure function (Network Exposure Function, NEF), local NEF (Local NEF or L-NEF), binding support function (Binding Support Function, BSF), application function (Application Function, AF), and the like. It should be noted that in the embodiments of this application, only the core network device in the NR system is introduced as an example, and the specific type of the core network device is not limited.

FIG. 2 is a schematic flowchart of a process in related technology where the network side requires a terminal to switch an access type of a specific PDU session from non-3GPP access (non-3GPP access) to 3GPP access (3GPP access). As shown in FIG. 2, after the network side initiates paging (Paging), requiring the terminal side to switch an access type of a specific PDU session from non-3GPP access to 3GPP access (that is, inter-access handover), and to reconstruct user plane resources on the 3GPP access, the process mainly includes the following steps:

S201. The UE determines whether to initiate a service request (Service Request) message. If the S-NSSAI associated with the established non-3GPP access PDU session is an allowed NSSAI for 3GPP access, the UE can carry the allowed PDU session status IE (Allowed PDU session status IE) in the service request message to inform the network side: the UE supports reactivation of the PDU session (that is, the type of the PDU session ID is switched from non-3GPP access to 3GPP access).

S202. After receiving the service request, the AMF transmits an AMF-SMF interface message to the SMF, indicating the SMF to establish a PDU session associated with the S-NSSAI and 3GPP access.

S203. The SMF performs NSAC before establishing a PDU session of 3GPP access and transmits information such as S-NSSAI and access type to the NSACF.

S204-1. If the NSAC is successful and the PDU session is successfully established, the SMF returns establishment success information to the AMF.

S204-2. If the PDU session establishment fails for some reasons, the SMF indicates different information to the AMF according to different situations.

S205. The AMF transmits a SERVICE ACCEPT (SERVICE ACCEPT) message to the UE. If the PDU session is successfully established, the Service Accept message carries the indication information of the successful PDU session establishment.

In S204-2, the SMF can indicate to the AMF in the following ways:
(1) If the SMF indicates the AMF that the UE is not in the service area of the local area data network (Local Area Data Network, LADN), the AMF uses 5GMM cause #43 "LADN not available (LADN not available)" in the PDU session reactivation result error cause IE (PDU session reactivation result error cause IE) in the SERVICE ACCEPT (SERVICE ACCEPT) message;
(2) If the SMF indicates the AMF that only high-priority services are allowed to be established, the AMF uses 5GMM cause #28 "restricted service area (restricted service area)" in the PDU session reactivation result error cause IE in the SERVICE ACCEPT message;
(3) If the SMF indicates the AMF that user plane resources are unavailable, the AMF uses 5GMM cause #92 "(insufficient user plane resources for the PDU session) insufficient user plane resources for the PDU session" in the PDU session reactivation result error cause IE in the SERVICE ACCEPT message. How the UE subsequently reinitiates the Service Request process depends on the implementation.

It can be seen that in related technologies, the network side does not notify the terminal that the PDU session reactivation has failed due to NSAC, resulting in the terminal not being able to obtain the corresponding information.

The following describes in detail the resource control method provided in the embodiments of this application by using some embodiments and application scenarios thereof with reference to the accompanying drawings.

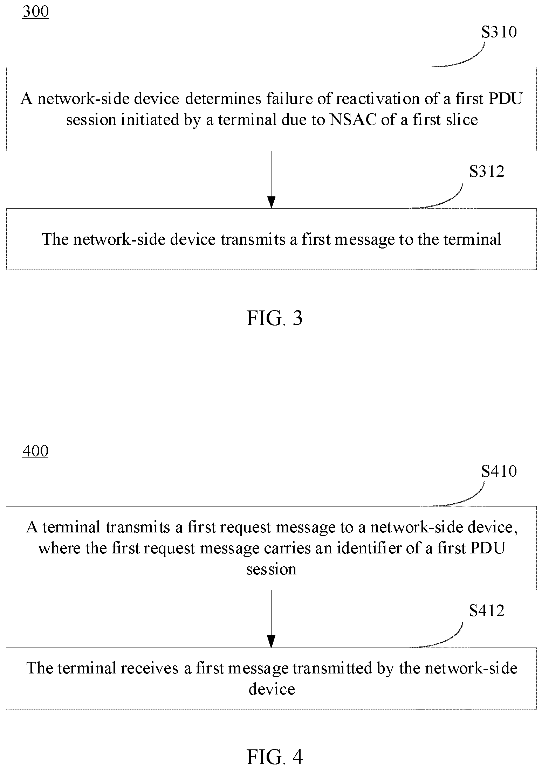

FIG. 3 is a schematic flowchart of a resource control method according to an embodiment of this application. The method 300 may be performed by a network-side device. Optionally, the network-side device may be a network element with mobility management functions (for example, an AMF network element of the core network). In other words, the method may be performed by software or hardware installed on the network-side device. As shown in FIG. 3, the method may include the following steps.

S310. A network-side device determines failure of reactivation of a first PDU session initiated by a terminal due to NSAC of a first slice.

In one possible implementation, before S310, the method may further include: receiving, by the network-side device, a first request message transmitted by the terminal, where the first request message carries an identifier of the first PDU session, the first PDU session is associated with the first slice, and the first request message requests the reactivation of the first PDU session. That is to say, before step 310, the terminal can initiate the reactivation of the first PDU session through the first request message.

In one possible implementation, the reactivation of the first PDU session includes a switching of an access type of the first PDU session. For example, the network side can initiate paging (Paging), requesting the terminal side to switch the access type of a specific PDU session from non-3GPP access to 3GPP access (that is, inter-access handover), and reconstruct user plane resources on 3GPP access. After receiving the paging from the network side, if the S-NSSAI associated with the established non-3GPP access first PDU session is an allowed (allowed) NSSAI of 3GPP access, the terminal can transmit a first request message, where the first request message may be a service request message. The terminal can carry the allowed PDU session status IE (Allowed PDU session status IE) in the first request message to inform the network side: the UE supports reactivation of the PDU session (that is, the type of PDU session ID is switched from non-3GPP access to 3GPP access).

S312. The network-side device transmits a first message to the terminal.

In the embodiment of this application, the first message carries at least one of the following:
(1) first indication information, indicating that a cause of the failure of the reactivation of the first PDU session is failure of the NSAC of the first slice. Through the first indication information, the terminal can know that the reactivation of the first PDU session failed due to the failure of the NSAC of the first slice, so that the terminal can adopt corresponding processing schemes in subsequent procedures, such as no longer initiating the establishment of the first PDU session associated with the first slice.
(2) second indication information, indicating a first timer bound to the first slice and to indicate that the terminal is allowed to reinitiate the reactivation of the first PDU session associated with the first slice after the first timer times out. Through the second indication information, the terminal can reinitiate the reactivation of the first PDU session associated with the first slice after expiry of the first timer, thereby avoiding the terminal from continuously reinitiating the reactivation of the first PDU session after determining the failure of the reactivation of the first PDU session, which may cause a signaling storm, and achieving more efficient and reasonable slice resource management and control.

In the embodiment of this application, the second indication information may include the first timer identifier and the duration of the first timer. The terminal can start the first timer corresponding to the second indication information according to the second indication information.

In one possible implementation, the first indication information includes a failure cause value, and the failure cause value includes at least one of the following:
(1) Congestion occurs at the network-side device. For example, the first message may carry the failure cause value (cause value): 5GMM cause #22 "congestion (congestion)".
(2) Resources for the first slice are insufficient. For example, the first message may carry the failure cause value (cause value): 5GMM cause #69 "insufficient resources for specific slice (insufficient resources for specific slice)".
(3) User plane resources for the first PDU session are insufficient. For example, the first message may carry the failure cause value (cause value): 5GMM cause #92 "insufficient user plane resources for the PDU session (insufficient user plane resources for the PDU session)".

In one possible implementation, the first message may further carry third indication information, and the third indication information indicates that the network-side device has received the first request message, that is, the network-side device has received the service request initiated by the terminal.

In one possible implementation, after receiving the first message, the terminal starts the first timer, and after expiry of the first timer, it may reinitiate the activation of the first PDU session. Therefore, in this possible implementation, after the network-side device transmits the first message to the terminal, the method may further include: after a timing duration of the first timer, receiving, by the network-side device, a second request message transmitted by the terminal, where the second request message carries the identifier of the first PDU session, and the second request message requests the reactivation of the first PDU session.

Through the technical solution provided by the embodiment of this application, in a case that the network-side device determines the failure of the reactivation of the first PDU session initiated by the terminal due to the NSAC of the first slice, it transmits the first indication information and/or the second indication information to the terminal. The first indication information indicates that the cause of the failure is the failure of the NSAC of the first slice, and the second indication information indicates the first timer bound to the first slice and indicates that the terminal is allowed to reinitiate the reactivation of the first PDU session associated with the first slice after the first timer expires. This enables the terminal to learn that the reactivation of the first PDU session failed due to the NSAC of the first slice, thereby allowing the terminal to perform more efficient slice resource control.

For example, after the network-side AMF network element receives the indication from the SMF that the slice is temporarily unavailable due to the NSAC, it performs operations including at least one of the following:
A. Transmit the first message to accept the service request initiated by the UE;
B. Carry the first cause value in the first message: 5GMM cause #22 "congestion" or 5GMM cause #69 "insufficient resources for specific slice" or 5GMM cause #92 "insufficient user plane resources for the PDU session" to inform the UE that the cause of the failure of the reactivation of the specific PDU session ID is the failure of the NSAC of the slice; and
C. Carry the first timer in the first message to indicate the UE to wait for the timer to expire before reinitiating the reactivation request.

FIG. 4 is a flowchart of a PDU session reactivation method according to an embodiment of this application. The method 400 may be executed by the terminal. In other words, the method may be performed by software or hardware installed on the terminal. As shown in FIG. 4, the method may include the following steps.

S410. A terminal transmits a first request message to a network-side device, where the first request message carries an identifier of a first PDU session, the first PDU session is associated with a first slice, and the first request message requests a reactivation of the first PDU session.

In the embodiment of this application, the first request message may be a service request message.

Optionally, the first request message indicates a switching of an access type of the first PDU session. For example, after receiving the paging initiated by the network side to request the terminal side to switch the access type of a specific PDU session from non-3GPP access to 3GPP access (that is, inter-access handover), if the S-NSSAI associated with the established non-3GPP access first PDU session is an allowed (allowed) NSSAI of 3GPP access, the terminal can transmit a first request message, carrying the allowed PDU session status IE (Allowed PDU session status IE) in the first request message to inform the network side: the UE supports the reactivation of the PDU session (that is, the type of the PDU session ID is switched from non-3GPP access to 3GPP access).

S412. The terminal receives a first message transmitted by the network-side device.

The network-side device may transmit the first message to the terminal using the method described in method 300 above, where the first message is the same as the first message in method 300. For details, refer to the description in method 300, which will not be repeated here.

In the embodiment of this application, the first message may carry at least one of the following:
(1) first indication information, indicating that a cause of the failure of the reactivation of the first PDU session is failure of the NSAC of the first slice.
(2) second indication information, indicating a first timer bound to the first slice and to indicate that the terminal is allowed to reinitiate the reactivation of the first PDU session associated with the first slice after expiry of the first timer.

In one possible implementation, the first indication information may include a failure cause value, and the failure cause value includes at least one of the following:
(1) congestion occurring at the network-side device;
(2) resources for the first slice being insufficient; and
(3) user plane resources for the first PDU session being insufficient.

In one possible implementation, the first message may further carry third indication information, and the third indication information indicates that the network-side device has received the first request message.

In one possible implementation, after the terminal receives the first message transmitted by the network-side device, the method may further include the following steps:

Step 1. In a case that the first message carries the second indication information, the terminal starts the first timer.

Step 2. After expiry of the first timer, the terminal transmits a second request message, where the second request message carries the identifier of the first PDU session, and the second request message requests the reactivation of the first PDU session.

In the above possible implementation, in a case that the first message carries the second indication information, the terminal can start the first timer indicated by the second indication information, and after expiry of the first timer, retransmit the request for reactivation of the first PDU session to avoid continuously and repeatedly requesting the reactivation of the first PDU session, which may cause a signaling storm and make the network continuously congested, thereby achieving more efficient and reasonable slice resource management and control.

In another possible implementation, after the terminal receives the first message transmitted by the network-side device, the method may further include the following steps:
(1) In a case that the first message does not carry the second indication information, the terminal starts a second timer, where the second timer is bound to the first slice.
(2) After expiry of the second timer, the terminal transmits a second request message, where the second request message carries the identifier of the first PDU session, and the second request message requests the reactivation of the first PDU session.

In the above possible implementation, in a case that the network-side device does not indicate the first timer, the terminal can start a locally set second timer bound to the first slice, and after expiry of the second timer, retransmit the request for reactivation of the first PDU session to avoid continuously and repeatedly requesting the reactivation of the first PDU session, which may cause a signaling storm and make the network continuously congested, thereby achieving more efficient and reasonable slice resource management and control.

In one possible implementation, before the terminal transmits the first request message to the network-side device, the method may further include: determining, by the terminal, that a target timer is not set or the set target timer has expired, where the target timer is bound to the first slice and the first slice is a slice associated with the first PDU session. That is to say, in this possible implementation, before transmitting the first request message, the terminal first determines whether a timer bound to the first slice (for example, the first timer or the second timer mentioned above) is set or whether the set timer bound to the first slice has expired. If the first timer or the second timer is not set or the set first timer or second timer has expired, S410 is executed.

In another possible implementation, the method may further include, after the terminal receives the first message transmitted by the network-side device: transmitting, by the terminal, a second request message carrying the identifier of the first PDU session, and terminating, by the terminal, a reactivation request process for the first PDU session in response to a number of consecutive times of transmitting a request for reactivation of the first PDU session reaching a predetermined value, where the second request message requests the reactivation of the first PDU session. In this possible implementation, after receiving the first message, the terminal can directly reinitiate the request for the reactivation of the first PDU session in a case that the first message does not carry the second indication until the maximum number of attempts is reached, after which it will stop trying.

In the embodiment of this application, the terminal can receive the first message transmitted by the network-side device after initiating the reactivation of the PDU session, thereby knowing that the reactivation of the PDU session failed due to NSAC. Optionally, the terminal can also attempt the reactivation of the PDU session again after waiting for a period of time, which can prevent the UE from continuously repeating the request messages, causing a signaling storm and making the network continuously congested, thereby achieving more efficient and reasonable slice resource management and control.

For example, when the UE initiates the PDU session reactivation process, it performs operations including at least one of the following:
A. If a timer (timer) is set, the UE needs to check whether there is a running timer bound to the slice associated with the PDU session ID. If the UE needs to reactivate the PDU session ID associated with the slice, it needs to wait for the timer to expire before initiating the reactivation request.
B. If no timer is set, the UE can immediately initiate the PDU session reactivation request, carrying the PDU session ID to be reactivated.

In addition, after receiving the first message transmitted by the network-side device, the UE performs operations including at least one of the following:
A. If the first message contains the cause value for the failure of the reactivation of the PDU session ID, which is 5GMM cause #22 "congestion", 5GMM cause #69 "insufficient resources for specific slice", or 5GMM cause #92 "insufficient user plane resources for the PDU session", and the first message contains a timer, the UE starts the timer. In one implementation, if the timer is 0, the UE immediately reinitiates the service request.
B. If the first message contains the cause value for the failure of the reactivation of the PDU session ID, which is 5GMM cause #22 "congestion", 5GMM cause #69 "insufficient resources for specific slice", or 5GMM cause #92 "insufficient user plane resources for the PDU session", but the first message does not contain a timer, the UE performs the fourth operation, which can include at least one of the following:
   1) The UE starts an implementation-specific (implementation specific) timer for the slice of the PDU session ID associated with the cause value.
   2) The UE does not set a timer and immediately reinitiates the service request message. The UE can continuously perform the attempt for a maximum number of times (for example, 5 times), after which it will no longer attempt to initiate the reactivation request until the network side indicates the UE again to initiate the PDU session reactivation request.

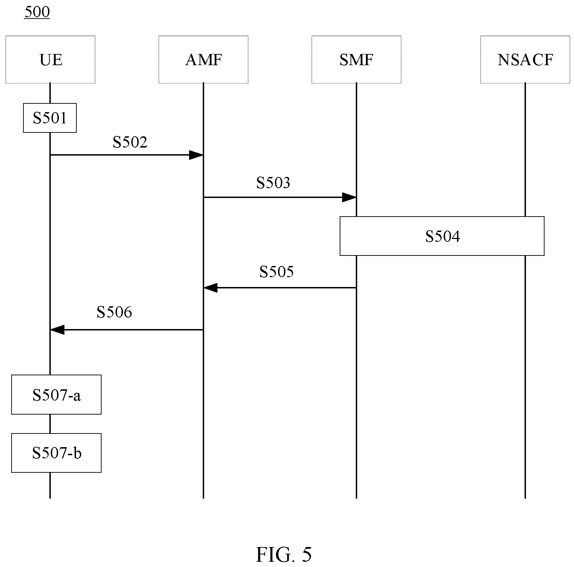

FIG. 5 is another flowchart of a resource control method according to an embodiment of this application. As shown in FIG. 5, the method 500 mainly includes the following steps:
S501. Before initiating the first request for PDU session reactivation, the UE determines whether a timer (timer) is set. If a timer is set, the UE checks whether there is a running timer for the slice associated with the PDU session ID. If there is, and the UE needs to reactivate the PDU session ID associated with the slice, the UE waits for the timer to expire before executing S502. If no timer is set, the set timer has expired, or the slice associated with the PDU session that the UE needs to activate is not bound to a timer, the UE executes S502.
S502. The UE transmits a service request to the network side, requesting the reactivation of the PDU session. The service request carries the identifier of the PDU session (PDU session ID) to be activated.
S503. After receiving the service request, the AMF reports information including the PDU session ID and S-NSSAI to the SMF and uses the PDU session ID for reactivation.
S504. The SMF interacts with the NSACF to perform NSAC.
S505. The SMF receives the failure feedback from the NSACF and informs the AMF that the current slice is unavailable due to NSAC.
S506. The AMF transmits the first message, and the first message carries at least one of the following:
   A. Indication information, indicating acceptance of the service request initiated by the UE.
   B. The first cause value: 5GMM cause #22 "congestion", 5GMM cause #69 "insufficient resources for specific slice", or 5GMM cause #92 "insufficient user plane resources for the PDU session", informing the UE that the cause of the failure of the reactivation of the specific PDU session ID is the failure of the NSAC of the slice.
   C. The first timer, which indicates the UE to wait for the timer to expire before reinitiating the reactivation request.
   S507. After receiving the first message, the UE performs the first operation, where the first operation includes at least one of the following:
      A. S507-a: If the first message contains the cause value for the failure of the reactivation of the PDU session ID, which is 5GMM cause #22 "congestion", 5GMM cause #69 "insufficient resources for specific slice", or 5GMM cause #92 "insufficient user plane resources for the PDU session", and the first message contains a timer, the UE starts the timer and reinitiates the service request message after the timer expires. In one implementation, if the timer is 0, the UE immediately reinitiates the service request message.
      B. S507-b: If the first message contains the cause value for the failure of the reactivation of the PDU session ID, which is 5GMM cause #22 "congestion", 5GMM cause #69 "insufficient resources for specific slice", or 5GMM cause #92 "insufficient user plane resources for the PDU session", but the first message does not contain a timer, the UE performs the second operation, which includes at least one of the following:
         1) The UE starts an implementation specific timer for the slice of the PDU session ID associated with the cause value and reinitiates the service request message after expiry of the timer.
         2) The UE does not set a timer for the slice and immediately reinitiates the service request message. The UE can continuously perform the attempt for a maximum number of times (for example, 5 times), after which it will no longer attempt to initiate the reactivation request until the network side indicates the UE again to initiate the PDU session reactivation request.

The resource control method provided in the embodiments of this application can be executed by a resource control apparatus. In the embodiments of this application, the resource control apparatus provided in the embodiments of this application is described by using an example in which a resource control apparatus performs the resource control method.

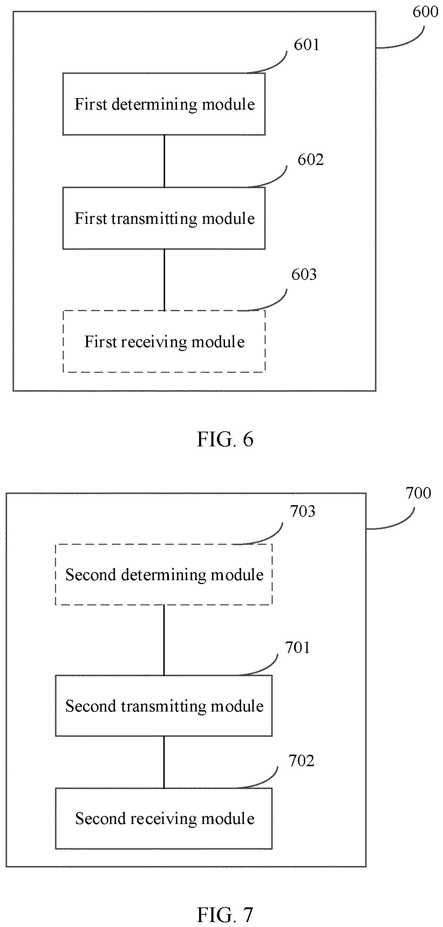

FIG. 6 is a schematic structural diagram of a resource control apparatus according to an embodiment of this application. As shown in FIG. 6, the apparatus 600 mainly includes: a first determining module 601 and a first transmitting module 602.

In the embodiment of this application, a first determining module 601 is configured to determine failure of reactivation of a first PDU session initiated by a terminal due to NSAC of a first slice; and a first transmitting module 602 is configured to transmit a first message to the terminal, where the first message carries at least one of the following: first indication information, indicating that a cause of the failure of the reactivation of the first PDU session is failure of NSAC of the first slice; and second indication information, indicating a first timer bound to the first slice and to indicate that the terminal is allowed to reinitiate the reactivation of the first PDU session associated with the first slice after expiry of the first timer.

In one possible implementation, the reactivation of the first PDU session includes a switching of an access type of the first PDU session.

In one possible implementation, the first indication information includes a failure cause value, and the failure cause value includes at least one of the following:
congestion occurring at the network-side device;
resources for the first slice being insufficient; and
user plane resources for the first PDU session being insufficient.

In one possible implementation, as shown in FIG. 6, the apparatus may further include: a first receiving module 603, configured to receive a first request message transmitted by the terminal, where the first request message carries an identifier of the first PDU session, the first PDU session is associated with the first slice, and the first request message requests the reactivation of the first PDU session.

In one possible implementation, the first message further carries third indication information, and the third indication information indicates that the network-side device has received the first request message.

In one possible implementation, the first receiving module 603 is further configured to, after a timing duration of the first timer, receive a second request message transmitted by the terminal, where the second request message carries the identifier of the first PDU session, and the second request message requests the reactivation of the first PDU session.

FIG. 7 is a schematic structural diagram of a PDU session reactivation apparatus according to an embodiment of this application. As shown in FIG. 7, the apparatus 700 mainly includes: a second transmitting module 701 and a second receiving module 702.

In the embodiment of this application, the second transmitting module 701 is configured to transmit a first request message to a network-side device, where the first request message carries an identifier of a first PDU session, the first PDU session is associated with a first slice, and the first request message requests a reactivation of the first PDU session; and the second receiving module 702 is configured to receive a first message transmitted by the network-side device, where the first message carries at least one of the following: first indication information, indicating that a cause of the failure of the reactivation of the first PDU session is failure of NSAC of the first slice; and second indication information, indicating a first timer bound to the first slice and to indicate that the terminal is allowed to reinitiate the reactivation of the first PDU session associated with the first slice after expiry of the first timer.

In one possible implementation, the first request message indicates a switching of an access type of the first PDU session.

In one possible implementation, the second transmitting module 701 is further configured to start the first timer in a case that the first message carries the second indication information, and after expiry of the first timer, transmit a second request message, where the second request message carries the identifier of the first PDU session, and the second request message requests the reactivation of the first PDU session.

In one possible implementation, the second transmitting module 701 is further configured to start a second timer in a case that the first message does not carry the second indication information, where the second timer is bound to the first slice; and after expiry of the second timer, transmit a second request message, where the second request message carries the identifier of the first PDU session, and the second request message requests the reactivation of the first PDU session.

In one possible implementation, as shown in FIG. 7, the apparatus may further include: a second determining module 703, configured to determine that a target timer is not set or the set target timer has expired, where the target timer is bound to the first slice and the first slice is a slice associated with the first PDU session.

In one possible implementation, the second transmitting module 701 is further configured to transmit a second request message carrying the identifier of the first PDU session, and terminate a reactivation request process for the first PDU session in response to a number of consecutive times of transmitting a request for reactivation of the first PDU session reaching a preset value, where the second request message requests the reactivation of the first PDU session.

The PDU session reactivation apparatus in the embodiments of this application may be an electronic device such as an electronic device with an operating system, or a component in an electronic device such as an integrated circuit or chip. The electronic device may be a terminal or other devices than terminals. For example, the terminal may include but is not limited to the types of the terminal 11 listed above, and the other devices may be servers, network attached storage (Network Attached Storage, NAS), or the like, which are not specifically limited in the embodiments of this application.

The PDU session reactivation apparatus provided in this embodiment of this application is capable of implementing various processes that are implemented by the terminal in the method embodiments of FIG. 3 to FIG. 5, with the same technical effects achieved. To avoid repetition, details are not described herein again.

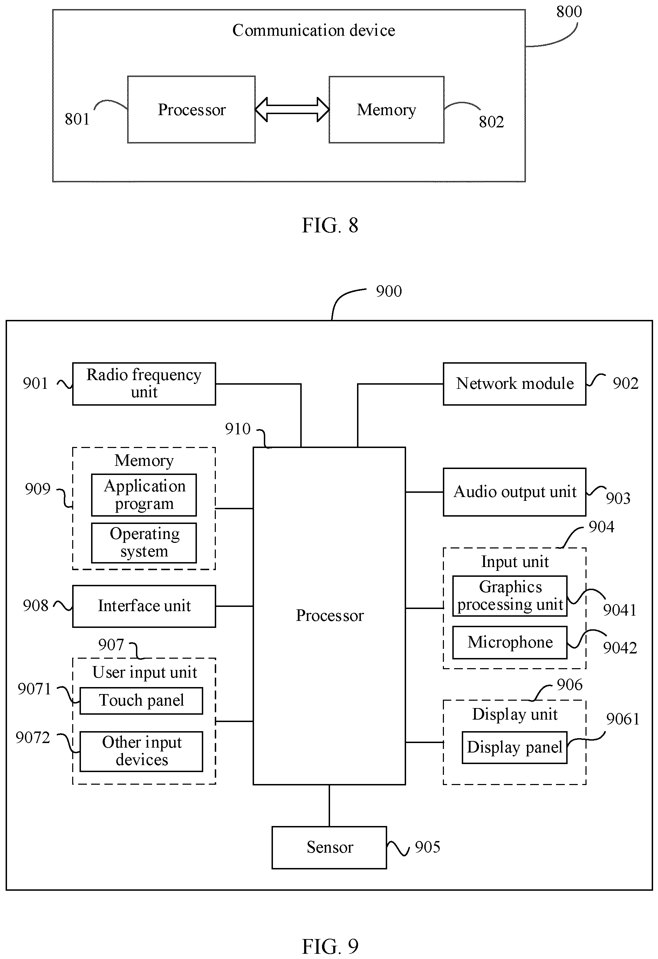

Optionally, as shown in FIG. 8, an embodiment of this application further provides a communication device 800 including a processor 801 and a memory 802. The memory 802 stores a program or instruction executable on the processor 801. For example, when the communication device 800 is a terminal, when the program or instruction is executed by the processor 801, the steps of the foregoing embodiment of the PDU session reactivation method are implemented, with the same technical effects achieved. In a case that the communication device 800 is a network-side device, when the program or instruction is executed by the processor 801, the steps of the foregoing embodiment of the resource control method are implemented, with the same technical effects achieved. To avoid repetition, details are not described herein again.

An embodiment of this application further provides a terminal, including a processor and a communication interface. The processor is configured to implement the steps of the foregoing embodiment of the PDU session reactivation method, and the communication interface is configured to communicate with external devices. This terminal embodiment corresponds to the foregoing method embodiment on the terminal side. All processes and implementations in the foregoing method embodiment are applicable to this terminal embodiment, with the same technical effect achieved. Specifically, FIG. 9 is a schematic diagram of a hardware structure of a terminal implementing the embodiments of this application.

The terminal 900 includes but is not limited to at least part of these components: a radio frequency unit 901, a network module 902, an audio output unit 903, an input unit 904, a sensor 905, a display unit 906, a user input unit 907, an interface unit 908, a memory 909, a processor 910, and the like.

It can be understood by those skilled in the art that the terminal 900 may further include a power supply (for example, battery) supplying power to the components. The power supply may be logically connected to the processor 910 via a power management system, so that functions such as charge management, discharge management, and power consumption management are implemented via the power management system. The structure of the terminal shown in FIG. 9 does not constitute any limitation on the terminal, and the terminal may include more or fewer components than shown in the figure, or combine some of the components, or have different arrangements of the components. Details are not described herein.

It should be understood that in an embodiment of this application, the input unit 904 may include a graphics processing unit (Graphics Processing Unit, GPU) 9041 and a microphone 9042. The graphics processing unit 9041 processes image data of a static picture or video obtained by an image capture apparatus (such as a camera) in an image capture or video capture mode. The display unit 906 may include a display panel 9061. The display panel 9061 may be configured in a form of a liquid crystal display, an organic light-emitting diode display, or the like. The user input unit 907 includes at least one of a touch panel 9071 and other input devices 9072. The touch panel 9071 is also referred to as a touchscreen. The touch panel 9071 may include two parts: a touch detection apparatus and a touch controller. Specifically, the other input devices 9072 may include but are not limited to a physical keyboard, a function button (for example, volume control button or on/off button), a trackball, a mouse, and a joystick. Details are not described herein.

In an embodiment of this application, the radio frequency unit 901 receives downlink data from a network-side device and transfers the data to the processor 910 for processing; and the radio frequency unit 901 can additionally send uplink data to the network-side device. Generally, the radio frequency unit 901 includes but is not limited to an antenna, an amplifier, a transceiver, a coupler, a low noise amplifier, a duplexer, and the like.

The memory 909 may be configured to store a software program or instruction and various data. The memory 909 may include a first storage are for storing a program or instruction and a second storage area for storing data. The first storage area may store an operating system, an application program or instruction required by at least one function (for example, a sound playback function or an image playback function), and the like. Additionally, the memory 909 may be a volatile memory or a non-volatile memory, or the memory 909 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 909 in the embodiments of this application includes but is not limited to these or any other applicable types of memories.

The processor 910 may include one or more processing units. Optionally, the processor 910 may integrate an application processor and a modem processor. The application processor primarily processes operations involving an operating system, user interface, application program, or the like. The modem processor primarily processes radio communication signals, for example, being a baseband processor. It can be understood that the modem processor may alternatively be not integrated in the processor 910.

The radio frequency unit 901 is configured to:
transmit a first request message to a network-side device, where the first request message carries an identifier of a first PDU session, the first PDU session is associated with a first slice, and the first request message requests a reactivation of the first PDU session; and
receive a first message transmitted by the network-side device, where the first message carries at least one of the following:
   first indication information, indicating that a reason for failure of the reactivation of the first PDU session is failure of NSAC of the first slice; and
   second indication information, indicating a first timer bound to the first slice and to indicate that the terminal is allowed to reinitiate the reactivation of the first PDU session associated with the first slice after expiry of the first timer.

An embodiment of this application further provides a network-side device, including a processor and a communication interface. The processor is configured to implement the steps of the foregoing embodiment of the resource control method, and the communication interface is configured to communicate with external devices. This network-side device embodiment corresponds to the foregoing network-side device method embodiment. All processes and implementations in the foregoing method embodiment are applicable to this network-side device embodiment, with the same technical effect achieved.

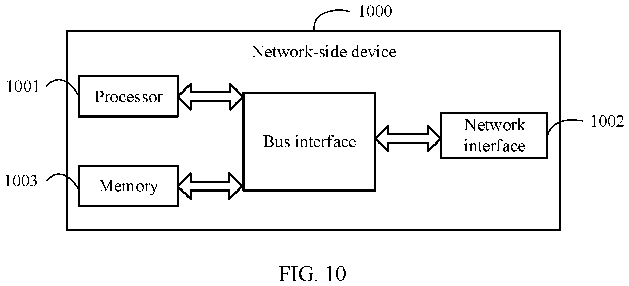

Specifically, an embodiment of this application further provides a network-side device. As shown in FIG. 10, the network-side device 1000 includes a processor 1001, a network interface 1002, and memory 1003. The network interface 1002 is, for example, a common public radio interface (common public radio interface, CPRI).

Specifically, the network-side device 1000 in this embodiment of the present invention further includes: an instruction or program stored in the memory 1003 and executable on the processor 1001. The processor 1001 invokes the instruction or program in the memory 1003 to execute the method executed by the modules shown in FIG. 6, with the same technical effects achieved. To avoid repetition, details are not described herein again.

An embodiment of this application further provides a readable storage medium, where the readable storage medium stores a program or instruction, and when the program or instruction is executed by a processor, the processes of the foregoing embodiments of the resource control method are implemented, or the processes of the foregoing embodiments of the PDU session reactivation method are implemented, with the same technical effects achieved. To avoid repetition, details are not described herein again.

The processor is a processor in the terminal described in the foregoing embodiment. The readable storage medium includes a computer-readable storage medium such as a computer read-only memory ROM, a random access memory RAM, a magnetic disk, or an optical disc.

An embodiment of this application further provides a chip. The chip includes a processor and a communication interface, where the communication interface is coupled to the processor, and the processor is configured to run a program or instruction to implement the processes of the foregoing embodiment of the resource control method, or to implement the processes of the foregoing embodiment of the PDU session reactivation method, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program/program product, where the computer program/program product is stored in a storage medium, and the computer program/program product is executed by at least one processor to implement the processes of the foregoing embodiment of the resource control method, or to implement the processes of the foregoing embodiment of the PDU session reactivation method, with the same technical effects achieved. To avoid repetition, details are not described herein again.

An embodiment of this application further provides a resource control system, including a terminal and a network-side device. The terminal may be configured to execute the steps of the foregoing PDU session reactivation method, and the network-side device may be configured to execute the steps of the foregoing resource control method.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the method and apparatus in the implementations of this application is not limited to functions being performed in the order shown or discussed, but may further include functions being performed at substantially the same time or in a reverse order, depending on the functions involved. For example, the described method may be performed in an order different from that described, and various steps may be added, omitted, or combined. In addition, features described with reference to some examples may be combined in other examples.

Based on the above description of embodiments, persons skilled in the art can clearly understand that the method in the foregoing embodiments can be implemented through software on a necessary hardware platform or certainly through hardware only, but in many cases, the former is the more preferred implementation. Based on such an understanding, the technical solutions of this application essentially or the part contributing to the prior art may be implemented in a form of a software product. The software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A resource control method, comprising:
determining, by a network-side device, failure of reactivation of a first protocol data unit PDU session initiated by a terminal due to network slicing access control NSAC of a first slice; and
transmitting, by the network-side device, a first message to the terminal, wherein the first message carries at least one of the following:
first indication information indicating that a cause of the failure of the reactivation of the first PDU session is failure of the NSAC of the first slice; and
second indication information indicating a first timer bound to the first slice and indicating that the terminal is allowed to reinitiate reactivation of the first PDU session associated with the first slice after expiry of the first timer.

2. The method according to claim 1, wherein the reactivation of the first PDU session comprises switching of an access type of the first PDU session.

3. The method according to claim 1, wherein the first indication information comprises a failure cause value, and the failure cause value comprises at least one of the following:
congestion occurring at the network-side device;
resources for the first slice being insufficient; and
user plane resources for the first PDU session being insufficient.

4. The method according to any one of claims 1 to 3, further comprising, before the network-side device determines the failure of the reactivation of the first PDU session initiated by the terminal due to the network slicing access control NSAC of the first slice:
receiving, by the network-side device, a first request message transmitted by the terminal, wherein the first request message carries an identifier of the first PDU session, the first PDU session is associated with the first slice, and the first request message requests the reactivation of the first PDU session.

5. The method according to claim 4, wherein the first message further carries third indication information, and the third indication information indicates that the network-side device has received the first request message.

6. The method according to claim 4, further comprising, after the network-side device transmits the first message to the terminal:
receiving, by the network-side device after a time length of the first timer, a second request message transmitted by the terminal, wherein the second request message carries the identifier of the first PDU session, and the second request message requests the reactivation of the first PDU session.

7. A PDU session reactivation method, comprising:
transmitting, by a terminal, a first request message to a network-side device, wherein the first request message carries an identifier of a first PDU session, the first PDU session is associated with a first slice, and the first request message requests reactivation of the first PDU session; and
receiving, by the terminal, a first message transmitted by the network-side device, wherein the first message carries at least one of the following:
first indication information indicating that a cause of failure of the reactivation of the first PDU session is failure of NSAC of the first slice; and
second indication information indicating a first timer bound to the first slice and indicating that the terminal is allowed to reinitiate reactivation of the first PDU session associated with the first slice after expiry of the first timer.

8. The method according to claim 7, wherein the first request message indicates switching of an access type of the first PDU session.

9. The method according to claim 7, further comprising, after the terminal receives the first message transmitted by the network-side device:
starting, by the terminal in a case that the first message carries the second indication information, the first timer; and
transmitting, by the terminal after expiry of the first timer, a second request message, wherein the second request message carries the identifier of the first PDU session, and the second request message requests the reactivation of the first PDU session.

10. The method according to claim 7, further comprising, after the terminal receives the first message transmitted by the network-side device:
starting, by the terminal in a case that the first message does not carry the second indication information, a second timer bound to the first slice; and
transmitting, by the terminal after expiry of the second timer, a second request message, wherein the second request message carries the identifier of the first PDU session, and the second request message requests the reactivation of the first PDU session.

11. The method according to any one of claims 7 to 10, further comprising, before the terminal transmits the first request message to the network-side device:
determining, by the terminal, that a target timer is not set or a set target timer has expired, wherein the target timer is bound to the first slice and the first slice is associated with the first PDU session.

12. The method according to claim 7, further comprising, after the terminal receives the first message transmitted by the network-side device:
transmitting, by the terminal, a second request message carrying the identifier of the first PDU session, and terminating, by the terminal, a reactivation request process for the first PDU session in response to a number of consecutive times of transmitting a request for reactivation of the first PDU session reaching a predetermined value, wherein the second request message requests the reactivation of the first PDU session.

13. A resource control apparatus, comprising:
a first determining module, configured to determine failure of reactivation of a first protocol data unit PDU session initiated by a terminal due to NSAC of a first slice; and
a first transmitting module, configured to transmit a first message to the terminal, wherein the first message carries at least one of the following:
first indication information indicating that a cause of the failure of the reactivation of the first PDU session is failure of the NSAC of the first slice; and
second indication information indicating a first timer bound to the first slice and indicating that the terminal is allowed to reinitiate reactivation of the first PDU session associated with the first slice after expiry of the first timer.

14. The apparatus according to claim 13, wherein the reactivation of the first PDU session comprises switching of an access type of the first PDU session.

15. The apparatus according to claim 13, wherein the first indication information comprises a failure cause value, and the failure cause value comprises at least one of the following:
congestion occurring at the network-side device;
resources for the first slice being insufficient; and
user plane resources for the first PDU session being insufficient.

16. The apparatus according to any one of claims 13 to 15, further comprising: a first receiving module, configured to receive a first request message transmitted by the terminal, wherein the first request message carries an identifier of the first PDU session, the first PDU session is associated with the first slice, and the first request message requests the reactivation of the first PDU session.

17. The apparatus according to claim 16, wherein the first message further carries third indication information, and the third indication information indicates that the network-side device has received the first request message.

18. The apparatus according to claim 16, wherein the first receiving module is further configured to, receive, after a time length of the first timer, a second request message transmitted by the terminal, wherein the second request message carries the identifier of the first PDU session, and the second request message requests the reactivation of the first PDU session.

19. A PDU session reactivation apparatus, comprising:
a second transmitting module, configured to transmit a first request message to a network-side device, wherein the first request message carries an identifier of a first PDU session, the first PDU session is associated with a first slice, and the first request message requests reactivation of the first PDU session; and
a second receiving module, configured to receive a first message transmitted by the network-side device, wherein the first message carries at least one of the following:
first indication information indicating that a cause of failure of the reactivation of the first PDU session is failure of NSAC of the first slice; and
second indication information indicating a first timer bound to the first slice and indicating that the terminal is allowed to reinitiate reactivation of the first PDU session associated with the first slice after expiry of the first timer.

20. The apparatus according to claim 19, wherein the first request message indicates switching of an access type of the first PDU session.

21. The apparatus according to claim 19, wherein the second transmitting module is further configured to start, in a case that the first message carries the second indication information, the first timer; and transmit, after expiry of the first timer, a second request message, wherein the second request message carries the identifier of the first PDU session, and the second request message requests the reactivation of the first PDU session.

22. The apparatus according to claim 19, wherein the second transmitting module is further configured to start, in a case that the first message does not carry the second indication information, a second timer bound to the first slice; and transmit, after expiry of the second timer, a second request message, wherein the second request message carries the identifier of the first PDU session, and the second request message requests the reactivation of the first PDU session.

23. The apparatus according to any one of claims 19 to 22, further comprising: a second determining module, configured to determine that a target timer is not set or a set target timer has expired, wherein the target timer is bound to the first slice and the first slice is associated with the first PDU session.

24. The apparatus according to claim 19, wherein the second transmitting module is further configured to transmit a second request message carrying the identifier of the first PDU session, and terminate a reactivation request process for the first PDU session in response to a number of consecutive times of transmitting a request for reactivation of the first PDU session reaching a predetermined value, wherein the second request message requests the reactivation of the first PDU session.

25. A terminal, comprising a processor and a memory, wherein the memory stores a program or instruction executable on the processor, and when the program or instruction is executed by the processor, the steps of the PDU session reactivation method according to any one of claims 7 to 12 are implemented.

26. A network-side device, comprising a processor and a memory, wherein the memory stores a program or instruction executable on the processor, and when the program or instruction is executed by the processor, the steps of the resource control method according to any one of claims 1 to 6 are implemented.

27. A readable storage medium, wherein the readable storage medium stores a program or instruction, and when the program or instruction is executed by a processor, the steps of the resource control method according to any one of claims 1 to 6 are implemented, or the steps of the PDU session reactivation method according to any one of claims 7 to 12 are implemented.
